# EUROPEAN PATENT APPLICATION

(11) **EP 4 538 891 A1**
(43) Date of publication of application: **16.04.2025**
(21) Application number: 23842037.6
(22) Date of filing: 28.06.2023
(51) Int. Cl.: G06F 11/10

(54) **ERROR DETERMINATION METHOD AND SYSTEM, PROCESSOR, AND MEMORY**

(30) Priority: 21.07.2022 CN 202210864871; 29.09.2022 CN 202211204450
(71) Applicant: Huawei Technologies Co., Ltd., Shenzhen, Guangdong 518129 (CN)
(72) Inventor: CHEN, Zhiyong, Shenzhen, Guangdong 518129 (CN); NIU, Yuanjun, Shenzhen, Guangdong 518129 (CN)
(74) Representative: Thun, Clemens
(86) International application number: PCT/CN2023/103220
(87) International publication number: WO 2024/016971

(57) **Abstract**

This application discloses an error determining method and system, a processor, and a memory, and pertains to the field of computer technologies. The error determining method is applied to the processor included in the error determining system. The processor obtains error information, where the error information can indicate a medium particle in which an error occurs in a plurality of medium particles. Then, the processor may determine, based on the error information, the medium particle in which the error occurs, and determine, without a calculation process that consumes a processing resource, the medium particle in which the error occurs. Therefore, the processor may use more processing resources to process the medium particle in which the error occurs, for example, perform error correction, thereby improving reliability and availability of the error determining system.

## Description

This application claims priorities to Chinese Patent Application No. 202210864871.2, filed on July 21, 2022 and entitled "MEMORY FAULT DETECTION METHOD, APPARATUS AND SYSTEM", and to Chinese Patent Application No. 202211204450.3, filed on September 29, 2022 and entitled "ERROR DETERMINING METHOD AND SYSTEM, PROCESSOR, AND MEMORY", both of which are incorporated herein by reference in their entireties.

### TECHNICAL FIELD

This application relates to the field of computer technologies, and in particular, to an error determining method and system, a processor, and a memory.

### BACKGROUND

A computer device includes a plurality of medium particles configured to store data. An error may occur in each medium particle in a process of storing data. Therefore, an error determining method needs to be provided, to determine a medium particle in which an error occurs from the plurality of medium particles.

### SUMMARY

This application provides an error determining method and system, a processor, and a memory, to determine a medium particle in which an error occurs from a plurality of medium particles. The technical solutions provided in this application include the following aspects.

According to a first aspect, an error determining method is provided. The error determining method is applied to a processor included in an error determining system, and the error determining system further includes a plurality of medium particles. After the processor obtains error information, because the error information can indicate a medium particle in which an error occurs in the plurality of medium particles, the processor can directly determine, based on the error information, the medium particle in which the error occurs.

Therefore, in this application, the processor determines, without a calculation process that consumes a processing resource, the medium particle in which the error occurs, and the processor can process, by using a saved processing resource, the medium particle in which the error occurs, for example, perform processing such as error correction, thereby improving reliability and availability of the error determining system. A process in which the processor consumes the processing resource to obtain, through calculation, the medium particle in which the error occurs is also referred to as an error detection process. The processing resource that needs to be consumed in the error detection process is exponentially positively correlated with a quantity of error bits. Therefore, the processor does not need to perform the error detection process, so that relatively considerable processing resources can be saved, and it is important that the processor does not need to perform the error detection process.

In a possible implementation, the error determining system further includes a control interface circuit, and the processor is connected to the control interface circuit through a line; and that the processor obtains error information includes: The processor receives, through the line, the error information sent by the control interface circuit. In this implementation, the processor may obtain the error information from the control interface circuit in a flexible obtaining manner.

In a possible implementation, the processor includes a host error correction code (error correction code, ECC) element, the control interface circuit includes a registering clock driver (registering clock driver, RCD), and the line includes a signal line. Because the processor includes the host ECC element, the signal line may be used as a line for exchanging the error information, and a speed of transmitting the error information through the signal line is high, thereby improving efficiency and timeliness of determining an error.

In a possible implementation, the processor includes a processing core, the control interface circuit includes an RCD, and the line includes a first bus. A speed of transmitting the error information by using the first bus may be slightly lower than using a signal line. However, this implementation does not require the processor to include a host ECC element, thereby having a wide application scope.

In a possible implementation, the processor includes a processing core, the control interface circuit includes a complex programmable logic device (complex programmable logic device, CPLD), and the line includes a second bus. A speed of transmitting the error information by using the second bus may be slightly lower than using a signal line. However, this implementation does not require the processor to include a host ECC element and an RCD, thereby having a wider application scope.

In a possible implementation, the control interface circuit is separately connected to the plurality of medium particles, the error information is obtained by the control interface circuit by processing a plurality of pieces of sub-error information in a parallel-to-serial manner, and the plurality of pieces of sub-error information are sent by the plurality of medium particles to the control interface circuit in parallel. For any medium particle in the plurality of medium particles, sub-error information sent by the any medium particle indicates an error status of the any medium particle. Because the control interface circuit aggregates the plurality of pieces of parallel sub-error information into serial error information, the processor may directly obtain the serial error information, thereby improving transmission efficiency of the error information. In addition, the processor can further learn error statuses of the plurality of medium particles in a short time, to facilitate the processor to perform coordinated processing on the plurality of medium particles.

In a possible implementation, the error status of the any medium particle includes: Whether an error occurs in the any medium particle. Alternatively, the error status of the any medium particle includes: No error occurs, a correctable error (correction error, CE) occurs, or a detectable uncorrectable error (detected uncorrectable error, DUE) occurs in the any medium particle. That is, in this application, the error status may be simply classified into two cases: No error occurs and an error occurs. Alternatively, the error status may be further classified into three cases at a finer granularity: No error occurs, a CE occurs, and a DUE occurs. Two cases or three cases may be flexibly selected according to an actual requirement.

In a possible implementation, the sub-error information is sent by the any medium particle when a DUE occurs in the any medium particle. Alternatively, the sub-error information is sent by the any medium particle when a CE or a DUE occurs in the any medium particle. That is, the medium particle may send the sub-error information only when a DUE occurs, or may send the sub-error information when a CE occurs or a DUE occurs. Therefore, whether the medium particle sends the sub-error information when a CE occurs may be flexibly configured according to an actual requirement. If the medium particle sends the sub-error information when a DUE occur, a processor with a stronger error correction capability may process these uncorrectable errors, thereby improving reliability and availability of the error determining system. If the medium particle sends the sub-error information when a CE occurs, the processor may learn that the CE occurs in the medium particle, so that the processor can manage the medium particle, and reliability and availability of the error determining system can also be improved.

In a possible implementation, the error information includes a plurality of bits, and the plurality of bits are in one-to-one correspondence with the plurality of medium particles. Because a quantity of medium particles is usually fixed, in this manner, the error information occupies a fixed quantity of bits, so that the error information has strong stability and universality.

In a possible implementation, the error information includes an identifier of the medium particle in which the error occurs. When there is a small quantity of medium particles in which an error occurs, the error information only needs to include a small quantity of identifiers, and the error information occupies a small quantity of bits, thereby saving a processing resource for transmitting the error information, and improving efficiency of transmitting the error information.

According to a second aspect, a processor is provided. The processor is configured to obtain error information, where the error information indicates a medium particle in which an error occurs in a plurality of medium particles; and
the processor is further configured to determine, based on the error information, the medium particle in which the error occurs.

In a possible implementation, the processor is configured to receive, through a line, the error information sent by a control interface circuit.

In a possible implementation, the processor includes a host ECC element, the control interface circuit includes an RCD, and the line includes a signal line.

In a possible implementation, the processor includes a processing core, the control interface circuit includes an RCD, and the line includes a first bus.

In a possible implementation, the error information includes a plurality of bits, and the plurality of bits are in one-to-one correspondence with the plurality of medium particles.

In a possible implementation, the error information includes an identifier of the medium particle in which the error occurs.

According to a third aspect, a memory is provided. The memory includes a plurality of medium particles, where the plurality of medium particles are configured to generate error information, and the error information indicates a medium particle in which an error occurs in the plurality of medium particles.

In a possible implementation, the memory further includes a control interface circuit, where the control interface circuit is configured to send the error information to a processor through a line.

In a possible implementation, the processor includes a host ECC element, the control interface circuit includes an RCD, and the line includes a signal line.

In a possible implementation, the processor includes a processing core, the control interface circuit includes an RCD, and the line includes a first bus.

In a possible implementation, the control interface circuit is separately connected to the plurality of medium particles; the plurality of medium particles are configured to send a plurality of pieces of sub-error information to the control interface circuit in parallel; for any medium particle in the plurality of medium particles, sub-error information sent by the any medium particle indicates an error status of the any medium particle; and the control interface circuit is further configured to process the plurality of pieces of sub-error information in a parallel-to-serial manner to obtain the error information.

In a possible implementation, the error status of the any medium particle includes whether an error occurs in the any medium particle; or the error status of the any medium particle includes that no error occurs, a CE occurs, or a DUE occurs in the any medium particle.

In a possible implementation, the any medium particle is configured to send the sub-error information when a DUE occurs in the any medium particle; or the any medium particle is configured to send the sub-error information when a CE or a DUE occurs in the any medium particle.

In a possible implementation, the error information includes a plurality of bits, and the plurality of bits are in one-to-one correspondence with the plurality of medium particles.

In a possible implementation, the error information includes an identifier of the medium particle in which the error occurs.

According to a fourth aspect, an error determining system is provided. The system includes a processor and a memory, where the processor is the processor provided in the second aspect and any possible implementation of the second aspect, and the memory is the memory provided in the third aspect and any possible implementation of the third aspect.

According to a fifth aspect, an error determining system is provided. The system includes a processor and a plurality of medium particles, where the plurality of medium particles are configured to generate error information, and the error information indicates a medium particle in which an error occurs in the plurality of medium particles; the processor is configured to obtain the error information; and the processor is further configured to determine, based on the error information, the medium particle in which the error occurs.

In a possible implementation, the system further includes a control interface circuit, where the processor is connected to the control interface circuit through a line; the control interface circuit is configured to send the error information to the processor through the line; and the processor is configured to receive, through the line, the error information sent by the control interface circuit.

In a possible implementation, the processor includes a processing core, the control interface circuit includes a CPLD, and the line includes a second bus.

In a possible implementation, the control interface circuit is separately connected to the plurality of medium particles; the plurality of medium particles are configured to send a plurality of pieces of sub-error information to the control interface circuit in parallel; for any medium particle in the plurality of medium particles, sub-error information sent by the any medium particle indicates an error status of the any medium particle; and the control interface circuit is further configured to process the plurality of pieces of sub-error information in a parallel-to-serial manner to obtain the error information.

In a possible implementation, the error status of the any medium particle includes whether an error occurs in the any medium particle; or the error status of the any medium particle includes that no error occurs, a CE occurs, or a DUE occurs in the any medium particle.

In a possible implementation, the any medium particle is configured to send the sub-error information when a DUE occurs in the any medium particle; or the any medium particle is configured to send the sub-error information when a CE or a DUE occurs in the any medium particle.

In a possible implementation, the error information includes a plurality of bits, and the plurality of bits are in one-to-one correspondence with the plurality of medium particles.

In a possible implementation, the error information includes an identifier of the medium particle in which the error occurs.

It should be understood that, for technical effects achieved by the technical solutions provided in the possible implementations corresponding to the second aspect to the fifth aspect of this application, refer to technical effects of the technical solution provided in the first aspect and the possible implementations corresponding to the first aspect. Details are not described herein again.

### BRIEF DESCRIPTION OF DRAWINGS

FIG. 1 is a diagram of an error determining system according to an embodiment of this application;
FIG. 2 is a diagram of another error determining system according to an embodiment of this application;
FIG. 3 is a diagram of still another error determining system according to an embodiment of this application;
FIG. 4 is a diagram in which a control interface circuit is separately connected to a plurality of medium particles according to an embodiment of this application;
FIG. 5 is a flowchart of an error determining method according to an embodiment of this application;
FIG. 6 is a diagram of sending error information in a time window according to an embodiment of this application;
FIG. 7 is a diagram of transmitting error information according to an embodiment of this application;
FIG. 8 is a schematic flowchart of ECC inside a medium particle according to an embodiment of this application; and
FIG. 9 is a diagram of performing ECC twice according to an embodiment of this application.

### DESCRIPTION OF EMBODIMENTS

Terms used in embodiments of this application are only used to explain specific embodiments of this application, but are not intended to limit this application.

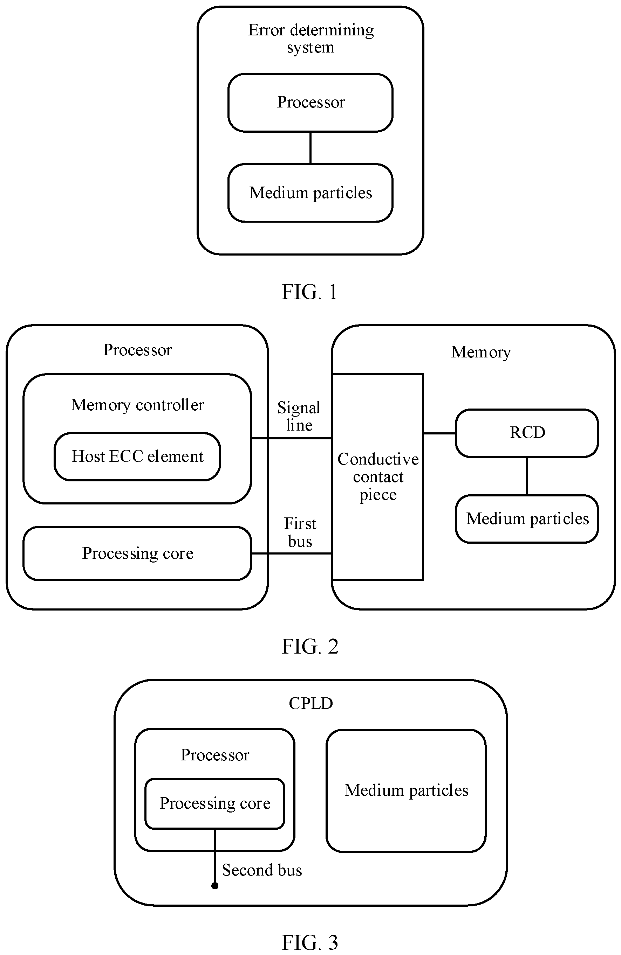

An embodiment of this application provides an error determining system. Refer to FIG. 1. The error determining system includes a processor and a plurality of medium particles. The processor may be configured to perform an error determining method provided in embodiments of this application. The error determining method is used to determine a medium particle in which an error occurs from the plurality of medium particles. A medium particle may be referred to as a logical unit (logical unit, LUN), or referred to as a die.

In an example embodiment, the error determining system includes but is not limited to the following case A1 and case A2.

Case A1: The error determining system includes a processor and a memory, where the memory includes a plurality of medium particles.

In case A1, the plurality of medium particles are integrated in the memory. For example, the memory further includes a conductive contact piece, the plurality of medium particles may be directly or indirectly connected to the conductive contact piece, and the processor is also connected to the conductive contact piece, so that the processor can be connected to the plurality of medium particles. The conductive contact piece may be arranged in a finger shape and gold-plated. Therefore, the conductive contact piece may also be referred to as a gold finger.

Case A2: The error determining system includes a processor and a plurality of medium particles.

In case A2, there is no need to integrate the plurality of medium particles, and the plurality of medium particles are discrete. The plurality of medium particles may be separately connected to the processor directly and indirectly.

For example, the error determining system further includes a control interface circuit, and the processor is connected to the control interface circuit through a line. That is, the error determining system includes the processor, the plurality of medium particles, and the control interface circuit. In this case, the error determining system includes but is not limited to the following case B1 and case B2.

Case A1-based case B1: The error determining system includes a processor and a memory, where the memory includes a plurality of medium particles and a control interface circuit.

In this case, the control interface circuit may be connected to a conductive contact piece included in the memory, and the processor is connected to the conductive contact piece through a line, so that the processor is connected to the control interface circuit through the line. Correspondingly, the plurality of medium particles may be indirectly connected to the conductive contact piece through the control interface circuit. That is, on the basis that the control interface circuit is connected to the conductive contact piece, the plurality of medium particles are also connected to the control interface circuit.

For example, case B1 may include the following case 1 and case 2.

Case 1: The processor includes a host (host) ECC element, the control interface circuit includes an RCD, and the line includes a signal line (pin).

The host ECC element is connected to the RCD through the signal line. For example, as shown in FIG. 2, the host ECC element is connected to the conductive contact piece through the signal line, the conductive contact piece is connected to the RCD, and the RCD is further connected to the plurality of medium particles. The processor may include a memory controller (controller), and the host ECC element is located in the memory controller. For example, the memory controller may further include another element that is not shown in FIG. 2, for example, a read/write (read/write, RD/WR) element. This is not limited herein.

For example, the signal line includes but is not limited to: a data queue (data queue, DQ) signal line configured to transmit data, a command address (command address, CA) signal line configured to transmit a command and an address, a signal line configured to transmit a clock signal (clock), and a signal line configured to transmit other information. A quantity of signal lines is not limited in this embodiment of this application. For example, the quantity of signal lines is 288.

The command transmitted by the CA signal line is a read command or a write command, where the read command is used to read data from the medium particle, and the write command is used to write data into the medium particle. An address transmitted by the CA signal line is an address of the medium particle. In addition, the foregoing clock signal indicates a clock cycle, the clock cycle is a time unit for interaction between the memory controller and the medium particle, and the clock cycle includes a rising edge and a falling edge. On the rising edge and the falling edge, the memory controller may separately interact with the medium particle once. One rising edge or one falling edge may be referred to as a burst (burst) or a heartbeat. The foregoing other information may be information related to the medium particle, for example, a temperature of the medium particle. This is not limited herein.

Case 2: The processor includes a processing core (core), the control interface circuit includes an RCD, and the line includes a first bus.

The processor core is connected to the RCD by using the first bus. For example, as shown in FIG. 2, the processing core is connected to the conductive contact piece by using the first bus, the conductive contact piece is connected to the RCD, and the RCD is further connected to the plurality of medium particles. It can be learned from FIG. 2 that the processing core and the memory controller that is described in case 1 are different elements in the processor. For example, the first bus may include but is not limited to an inter-integrated circuit (inter-integrated circuit, I2C) bus, or an improved inter integrated circuit (improved inter integrated circuit, I3C). Compared with the I2C bus, the I3C bus has a higher information transmission rate and is compatible with the I2C bus. The I3C bus integrates advantages of the I2C bus and a serial peripheral interface (serial peripheral interface, SPI), and has additional new functions. The I2C bus has advantages of dual lines and simplicity, and the SPI bus has advantages of low power consumption and a high rate. Therefore, for example, the first bus may be mainly the I3C bus. In addition, software such as a basic input/output system (basic input/output system, BIOS) may run on the processing core.

For example, the RCDs in case 1 and case 2 each may include a register, and the register has a storage function. In addition, the case shown in FIG. 2 is a case in which the processor includes both the host ECC element and the processing core, that is, a case in which case 1 and case 2 coexist. In addition to this case, the processor may include only the host ECC element, that is, only case 1 exists. Alternatively, the processor may include only the processing core, that is, only case 2 exists.

Case A2-based B2: The error determining system includes a processor, a plurality of medium particles, and a control interface circuit.

The control interface circuit may be directly connected to the processor through a line. Correspondingly, the plurality of discrete medium particles may also be connected to the control interface circuit, and indirect connections between the processor and the plurality of medium particles are implemented by using the control interface circuit.

For example, case B2 may include the following case 3.

Case 3: The processor includes a processing core, the control interface circuit includes a CPLD, and the line includes a second bus.

The processing core is connected to the CPLD by using the second bus. On this basis, the CPLD is further connected to the plurality of medium particles. For example, as shown in FIG. 3, the CPLD may carry the processor and a plurality of medium particles. It should be understood that it is an example case that the processor and the plurality of medium particles shown in FIG. 3 are located on a same side of the CPLD. The processor and the plurality of medium particles may alternatively be located on different sides of the CPLD, for example, two opposite sides of the CPLD. For example, the second bus includes but is not limited to an I2C bus, an I3C bus, an SPI bus, or a local bus (local bus). For example, the second bus may be mainly the I3C bus.

For example, the CPLD may have a storage function. In addition, an RCD may also be included in case 3. In this case, the RCD is also connected to the CPLD, so that an indirect connection between the RCD and the processor and an indirect connection between the RCD and the plurality of medium particles are implemented through the CPLD.

In an example embodiment, regardless of whether the control interface circuit is an RCD or a CPLD, the control interface circuit may be separately connected to the plurality of medium particles. Each medium particle includes a pin, the control interface circuit includes a plurality of pins, and a quantity of the pins included in the control interface circuit is equal to a quantity of the medium particles, so that the pins included in the control interface circuit are in one-to-one correspondence with the pins included in all the medium particles. In this case, corresponding pins are connected by using a connecting line, to separately connect the control interface circuit to each medium particle.

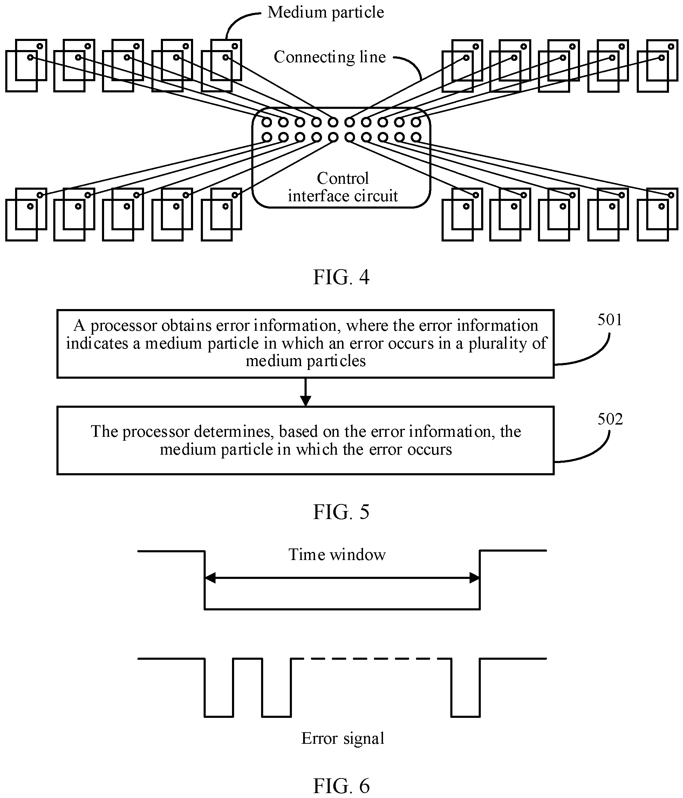

Refer to FIG. 4. FIG. 4 shows the control interface circuit and the plurality of medium particles, and the pins are represented by circles in FIG. 4. It should be understood that 40 medium particles shown in FIG. 4 are merely an example, and are not used to limit the quantity of medium particles included in the error determining system. In addition, for brevity, FIG. 4 shows only 20 pins on the control interface circuit, and the 20 pins are respectively connected to 20 medium particles. Actually, 40 pins should be included in the control interface circuit in FIG. 4, and the 40 pins should be respectively connected to the 40 medium particles.

For example, the pin includes but is not limited to a general-purpose input/output (general-purpose input/output, GPIO) pin. This is not limited herein.

In this embodiment of this application, the processor is, for example, a central processing unit (central processing unit, CPU), and the medium particle is, for example, a dynamic random access memory (dynamic random access memory, DRAM). In addition, in some implementations, the memory is classified based on a physical structure of the memory. In this case, the memory includes but is not limited to a dual in-line memory module (dual-inline memory Module, DIMM) or a single in-line memory module (single-inline memory Module, SIMM). In some other implementations, the memory may be classified based on a memory-dependent technology. In this case, the memory includes but is not limited to: a double data rate (double data rate, DDR) memory, a high bandwidth memory (high bandwidth memory, HBM), a not and (not and, NAND) memory, a universal backplane management (universal backplane management, UBM) memory, or a compute express link (compute express link, CXL) memory. For example, the DDR may include a DDR4, a DDR5, a DDR6, and the like, and the HBM may include an HBM2, an HBM3, and the like.

It should be understood that the processor, the medium particles, and the memory described herein are all examples, and are not intended to constitute a limitation. Another existing or possible future processor, medium particle, or memory, if applicable to embodiments of this application, should also fall within the protection scope of embodiments of this application and be included herein by reference.

With reference to the error determining method provided in embodiments of this application, the following describes functions of various elements included in FIG. 1 to FIG. 4. The error determining method may be used in the foregoing processor. As shown in FIG. 5, the error determining method includes the following step 501 and step 502.

Step 501: A processor obtains error information, where the error information indicates a medium particle in which an error occurs in a plurality of medium particles.

The medium particle may be configured to store data. In a process of using each medium particle, an error may occur in the medium particle. For example, a property of the medium particle changes due to a reason such as a long use time of the medium particle. In this case, an error occurs in the medium particle, and consequently, an error occurs in data stored in the medium particle. For another example, although the property of the medium particle does not change, an accidental error occurs in the medium particle, which also causes an error in the data stored in the medium particle. Therefore, there may be a medium particle in which an error occurs in the plurality of medium particles, and the processor needs to obtain error information used to indicate the medium particle in which the error occurs in the plurality of medium particles.

In an example embodiment, that a processor obtains error information includes but is not limited to the following case C1 and case C2.

Case C1: A control interface circuit sends the error information to the processor through a line, and correspondingly, the processor receives, through the line, the error information sent by the control interface circuit.

Case C1 may be applied to a case in which an error determining system includes the control interface circuit, for example, the foregoing case B1 and case B2. Correspondingly, the processor, the control interface circuit, and the line may include the foregoing case 1 to case 3.

Case 1: An RCD sends the error information to a host ECC element through a signal line. Because the processor includes the host ECC element, the error information may be transmitted through the signal line, and a speed of transmitting the error information is high, thereby improving error determining efficiency. Case 1 is applicable to a case in which the processor includes the host ECC element. If the processor does not include the host ECC element, the processor needs to be improved, to add a host ECC element to the processor. In addition, in case, 1 the RCD also needs to be improved, so that the RCD can send the error information to the host ECC element. In conclusion, error determining efficiency in case 1 is high, and the processor and the RCD may need to be improved.

For example, in case 1, the signal line may be a specified signal line, or may be a signal line in an idle state when the error information needs to be sent. This is not limited herein. For example, when a memory is of a DDR5, the signal line may be a specified DQ signal line. For another example, when the memory is a DDR4 memory, the signal line may be a signal line in an idle state when the error information needs to be sent. For example, when the error information needs to be sent, if a signal line used to transmit a temperature of the medium particle is in an idle state, the error information may be sent through the signal line used to transmit the temperature of the medium particle.

Case 2: The RCD sends the error information to a processing core by using a first bus. Because the host ECC element is not used, the signal line can no longer be used, but the first bus needs to be used to transmit the error information. A speed of transmitting the error information by using the first bus is slower than using the signal line. However, case 2 may be applied to a case in which the processor does not include the host ECC element, and the processor does not need to be improved, but only the RCD needs to be improved, so that the RCD can send the error information to the processing core. In conclusion, error determining efficiency in case 2 is lower than that in case 1, and the RCD may need to be improved, but the processor does not need to be improved.

In case 1 and case 2, as shown in FIG. 6, the sending of the error information may be completed in one time window. For example, the time window is a CRC_ALERT_PW time window defined in a related specification. It should be understood that the error information shown in FIG. 6 is merely an example form, and is not intended to limit a form of the error information obtained by the processor in this embodiment of this application.

Case 3: A CPLD sends the error information to the processing core by using a second bus. In case 3, because the host ECC element is not used, the signal line cannot be used, but the second bus needs to be used to transmit the error information. A speed of transmitting the error information by using the second bus is slower than using the signal line. However, in case 2, neither the processor needs to be improved nor the RCD needs to be improved, but only programming corresponding to the CPLD needs to be modified, so that the CPLD can send the error information to the processing core. Correspondingly, the CPLD sends the error information based on modified programming. In case 3, the second bus needs to be used, and the error information needs to be sent based on the modified programming. Therefore, error determining efficiency in case 3 is lower than that in case 2. However, in case 3, no hardware (that is, the processor and the RCD) needs to be improved, but only software (that is, the programming corresponding to the CPLD) needs to be improved, thereby providing strong applicability.

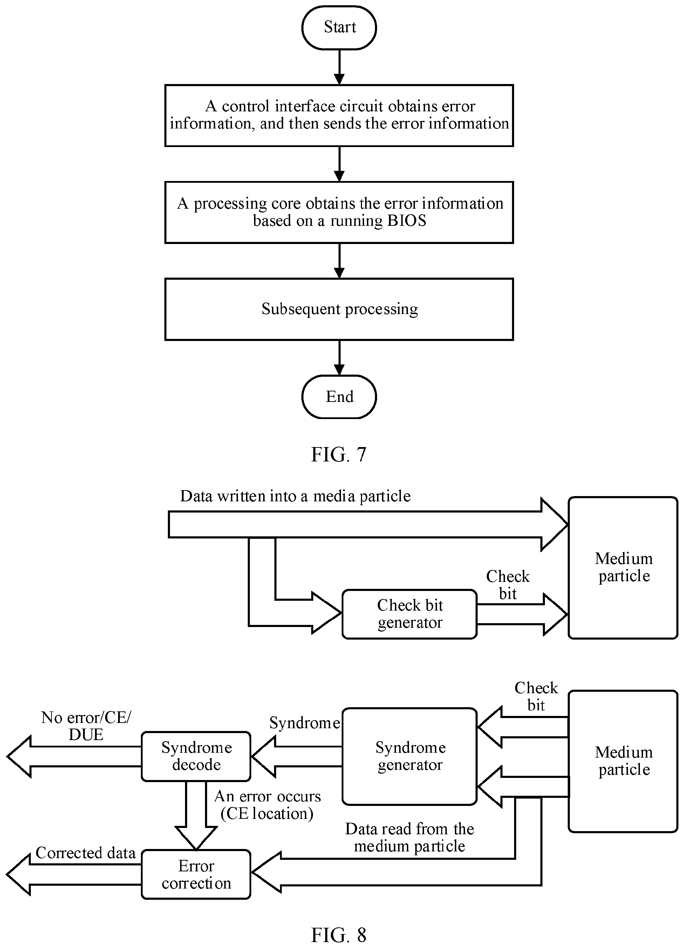

In case 2 and case 3, as shown in FIG. 7, after the control interface circuit obtains the error information and sends the error information, the processing core included in the processor needs to obtain the error information based on a running BIOS, to facilitate subsequent processing. For the subsequent processing, refer to the description in step 502. Details are not described herein.

Regardless of a manner in which the control interface circuit sends the error information, the error information needs to be first obtained before the control interface circuit sends the error information. In some implementations, when the control interface circuit is not separately connected to the plurality of medium particles, the plurality of medium particles may send error information to the control interface circuit one by one. For example, after the 0^{th} medium particle sends sub-error information to the control interface circuit, the 1^{st} medium particle sends sub-error information to the control interface, and so on. Then, the control interface circuit may aggregate a plurality of pieces of sub-error information received one by one into a plurality of pieces of parallel sub-error information. In some other implementations, when the control interface circuit is separately connected to the plurality of medium particles, the plurality of medium particles send a plurality of pieces of sub-error information to the control interface circuit in parallel. That is, if the plurality of pieces of sub-error information are sent by the plurality of medium particles to the control interface circuit in parallel, the control interface circuit directly receives the plurality of pieces of parallel sub-error information. For any medium particle in the plurality of medium particles, sub-error information sent by the any medium particle indicates an error status of the any medium particle.

For example, the error status of the any medium particle includes whether an error occurs in the any medium particle. That is, the error status includes two cases: No error occurs and an error occurs. Alternatively, the error status of the any medium particle includes that no error occurs, a CE occurs, or a DUE occurs in the any medium particle. That is, the error status includes three cases. Whether the error status includes two cases or three cases may be selected based on an actual situation.

The case in which the control interface circuit is separately connected to the plurality of medium particles is the case shown in FIG. 4. It can be learned from FIG. 4 that a pin included in the control interface circuit and a pin included in each medium particle are correspondingly connected by using a connecting line. In this case, any medium particle may send sub-error information to the control interface circuit by controlling a level of the connecting line. A process of sending the sub-error information is also referred to as a signaling (signaling) process. The level of the connecting line is also referred to as an alert (alert) signal. For example, when the any medium particle controls the level of the connecting line to be a first level, the sub-error information indicates that an error occurs in the any medium particle. Alternatively, when the any medium particle controls the level of the connecting line to be a second level, the sub-error information indicates that no error occurs in the any medium particle. The second level is different from the first level. For example, the first level may be greater than the second level, or the first level may be less than the second level. Certainly, the first level may be further divided into two different sub-levels, which are respectively used to indicate occurrence of a CE and occurrence of a DUE.

Certainly, in addition to that the signaling is performed by controlling the level of the connecting line, the signaling may also be performed in another manner. For example, the signaling may be performed by using a coded signal supported by a medium particle interface, or the signaling may be performed by using a message interrupt (message interrupt) message. This is not limited herein.

After obtaining the plurality of pieces of parallel sub-error information, the control interface circuit processes the plurality of pieces of sub-error information in a parallel-to-serial manner to obtain the error information. In other words, the error information is obtained by the control interface circuit by processing the plurality of pieces of sub-error information in a parallel-to-serial manner. In some implementations, after obtaining the error information, the control interface circuit sends the error information to the processor in real time. In some other implementations, after obtaining the error information, the control interface circuit stores the error information. For example, when the control interface circuit is an RCD, the error information is stored by using a register. For another example, when the control interface circuit is a CPLD, the error information is stored by using a storage function. Then, the control interface circuit may send a request to the processor. After receiving the request, the processor sends an obtaining instruction to the control interface circuit. The control interface circuit reads the stored error information based on the obtaining instruction, and returns the error information to the processor.

In an example embodiment, the error information obtained by the controller includes but is not limited to the following case D1 and case D2.

Case D1: The error information includes a plurality of bits, and the plurality of bits are in one-to-one correspondence with the plurality of medium particles.

The correspondence between the plurality of bits and the plurality of medium particles may be obtained by the processor through negotiation with the control interface circuit, so that the processor can identify which bit corresponds to which medium particle, and the processor can determine, based on a bit, whether a medium particle corresponding to the bit is a medium particle in which an error occurs. For example, if there are 40 medium particles, the plurality of bits are 40 bits. In this case, it may be that the 1^{st} bit corresponds to the 1^{st} medium particle, and so on, with the 40^{th} bit corresponding to the 40^{th} medium particle. Alternatively, it may be that the 1^{st} bit corresponds to the 40^{th} medium particle, and so on, with the 40^{th} bit corresponding to the 1^{st} medium particle. Certainly, there may be another correspondence, which is not described herein one by one.

For example, for any bit in the plurality of bits, if a value of the any bit is a first value, it indicates that an error occurs in a medium particle corresponding to the any bit; or if the value of the any bit is a second value, it indicates that no error occurs in the medium particle corresponding to the any bit. The first value is different from the second value. For example, the first value 0, and the second value is 1. For another example, the first value is 1, and the second value is 0. Alternatively, the first value and the second value may be values other than 0 and 1. This is not limited herein.

Case D2: The error information includes an identifier of the medium particle in which the error occurs.

One identifier is used to uniquely indicate one medium particle. A form of the identifier is not limited in this embodiment of this application. The form of the identifier may be a numerical value, a character string, or the like. This is not limited herein. The processor may negotiate with the control interface circuit, so that after receiving an identifier, the processor may identify a medium particle indicated by the identifier, and determine that the medium particle indicated by the identifier is the medium particle in which the error occurs.

In the foregoing case D1, the error information occupies a fixed quantity of bits, thereby having strong stability and universality. In addition, the quantity of the bits occupied by the error information is the same as the quantity of the medium particles, and the quantity of the medium particles is usually limited. Therefore, the quantity of the bits occupied by the error information is not excessively large. However, in the foregoing case D2, because medium particles in which an error occurs may be different, and identifiers of the medium particles in which the error occurs are also different, the quantity of the bits occupied by the error information may be unfixed. However, if there is a small quantity of medium particles in which the error occurs, the quantity of the bits occupied by the error information is small, for example, less than the quantity of the bits occupied by the error information in case D1. For example, in this embodiment of this application, case D1 or case D2 may be selected by default, or a case in which the error information occupies a small quantity of bits may be selected from case D1 and case D2.

Certainly, in addition to the foregoing case D1 and case D2, the control interface circuit may not perform parallel-to-serial processing on the plurality of pieces of sub-error information, but directly send the plurality of pieces of sub-error information to the processor in parallel through lines. Considering that a large quantity of lines are occupied in this manner, this manner is applicable to a scenario in which a large quantity of lines are available between the processor and the control interface circuit.

For example, regardless of a manner in which the control interface circuit obtains the error information, the control interface circuit may encode the error information to obtain encoded error information. The error information is encoded, that is, the error information is compressed, so that a quantity of bits occupied by the encoded error information is less than the quantity of bits occupied by the error information. Correspondingly, after receiving the encoded error information, the processor decodes the encoded error information to obtain the error information.

In addition, before any medium particle sends sub-error information to the control interface circuit, the any medium particle needs to determine the sub-error information. In an example embodiment, a manner in which the any medium particle determines the sub-error information includes but is not limited to the following case E1 and case E2.

Case E1: An ECC process is performed inside the any medium particle to obtain the sub-error information. The process may also be referred to as on-die (on-die) ECC, and the process may be a process imperceptible to the processor.

In some implementations, if the error status indicated by the sub-error information includes that no error occurs and that an error occurs, a process of determining the sub-error information may include: The any medium particle obtains, through calculation, a target value based on data read from the any medium particle and obtains, through calculation, a reference value based on data written into the any medium particle; and then, the any medium particle generates a comparison result between the target value and the reference value, and determines the sub-error information based on the comparison result. That is, the sub-error information sent by the any medium particle is determined based on a comparison result generated inside the any medium particle, where the comparison result is the comparison result between the target value and the reference value, the target value is obtained through calculation based on the data read from the any medium particle, and the reference value is obtained through calculation based on the data written into the any medium particle.

If the comparison result is that the target value is different from the reference value, the sub-error information sent by the any medium particle indicates that an error occurs in the any medium particle; or if the comparison result is that the target value is the same as the reference value, the sub-error information sent by the any medium particle indicates that no error occurs in the any medium particle.

In some other implementations, if the error status indicated by the sub-error information includes that no error occurs, a CE occurs, or a DUE occurs, as shown in FIG. 8, the determining the sub-error information may include the following process.

In a write process, for data that needs to be written into a medium particle (data to memory), the data is written into the medium particle, and the data is also input into a check bit generator (check bit generator), so that the check bit generator generates and outputs a check bit (check bit) corresponding to the data. Then, the check bit is also written into the medium particle. The data and the check bit may be respectively stored in different units in the medium particle.

In a reading process, for data that needs to be read from a medium particle (data from memory), both the data and a check bit corresponding to the data are read. Then, both the data and the check bit are input into a syndrome generator (syndrome generator), and the syndrome generator generates a syndrome (syndrome) corresponding to the data. The syndrome is decoded through a syndrome decode (syndrome decode) process.

After the syndrome is decoded, if the syndrome is zero, it indicates that no error occurs, that is, there is no error (no error). If the syndrome is not zero and can match one column in an H matrix, it indicates that a CE occurs, where the H matrix is a check matrix. If the syndrome is not zero and cannot match any column in the H matrix, it indicates that a DUE occurs. Therefore, it can be learned that the error status is that no error occurs, a CE occurs, or a DUE occurs. When a CE occurs, for the data read from the medium particle, CE location (location) is first performed, that is, a bit location in which an error occurs is determined, and then error correction (error correction) is performed, to obtain corrected data (corrected error).

In the on-die ECC process, bits occupied by data and bits occupied by data used to detect an error status affect bits occupied by a CE. According to the joint electron device engineering council (joint electron device engineering council, JEDEC) specification (spec), if the data occupies 128 bits, and the data used to detect an error is a Hamming code of 8 bits, for example, the foregoing reference value or check bit is 8 bits, the CE should occupy 1 bit. In other words, an error of 1 bit can be corrected. According to this specification, an error of 2 bits can be detected but cannot be corrected. Therefore, this specification is also referred to as single-bit error correction double-bit error detection (single error correction double error correction, SEC-DED). Based on this, if only an error of 1 bit is detected, the error is a CE; or if an error of 2 bits is detected, the error is a DUE.

In some implementations, the any medium particle sends the sub-error information when a DUE occurs in the any medium particle. In some other implementations, the any medium particle sends the sub-error information when a CE or a DUE occurs in the any medium particle. It can be learned that when a CE occurs, whether the any medium particle sends the sub-error information may be flexibly configured. For example, the medium particle includes a mode register (mode register), and the mode register is set to configure whether the any medium particle sends the sub-error information when a CE occurs.

Case E2: The any medium particle determines the sub-error information based on information related to the medium particle.

For example, if a value of the information related to the medium particle exceeds a threshold, the sub-error information sent by the any medium particle indicates that an error occurs in the any medium particle. Further, it may be determined, based on a degree to which the value exceeds the threshold, whether a CE or a UCE occurs in the any medium particle. If the value of the information related to the medium particle does not exceed the threshold, the sub-error information sent by the any medium particle indicates that no error occurs in the any medium particle.

For example, the information related to the medium particle includes but is not limited to a temperature of the medium particle, a voltage of the medium particle, and a current of the medium particle. This is not limited herein.

Case C2: The processor receives the error information sent by the plurality of medium particles.

Case C2 may be applied to cases in which the error determining system does not include the control interface circuit, for example, the foregoing case A1 and case A2. In case C2, the any medium particle may determine sub-error information, and the plurality of medium particles send a plurality of pieces of sub-error information to the processor in parallel. In this case, the plurality of pieces of sub-error information are error information. Alternatively, parallel-to-serial processing may be performed on the plurality of pieces of parallel sub-error information in another manner, to obtain the error information in the foregoing case D1 and case D2, and then the obtained error information is sent to the processor. For example, the another manner means that the parallel-to-serial processing may be performed by using another element other than the control interface circuit, or the parallel-to-serial processing may be performed by specifying one medium particle from the plurality of medium particles. For a manner in which the any medium particle determines the sub-error information, refer to the description in case C1, and for a manner of performing the parallel-to-serial processing, refer to the description in case C1. Details are not described herein again.

It can be learned from the foregoing descriptions of case C1 and case C2 that the error information may be indirectly generated by the plurality of medium particles. For example, the plurality of medium particles generate a plurality of pieces of sub-error information, and the plurality of pieces sub-error information are aggregated as the error information. Alternatively, the error information may be directly generated by the plurality of medium particles. For example, the plurality of pieces of sub-error information are the error information. Therefore, in any case, it may be considered that the error information is generated by the plurality of medium particles, that is, the plurality of medium particles are configured to generate the error information.

Step 502: The processor determines, based on the error information, the medium particle in which the error occurs.

Because the error information obtained in step 501 indicates the medium particle in which the error occurs in the plurality of medium particles, the processor may directly determine, based on the error information, the medium particle in which the error occurs, to perform subsequent processing, and determine, without a process such as calculation that consumes a processing resource, the medium particle in which the error occurs. Because the processor does not need to consume the processing resource to obtain, through calculation, the medium particle in which the error occurs, the processor may use more processing resources for the subsequent processing, thereby improving reliability and availability of the error determining system. For example, after receiving the error information, the processor may generate a processing log, where the processing log does not include content that the processor consumes the processing resource to obtain, through calculation, the medium particle in which the error occurs, but includes content that the processor performs the subsequent processing.

A process in which the processor consumes the processing resource to obtain, through calculation, the medium particle in which the error occurs is also referred to as an error detection process. The processing resource that needs to be consumed in the error detection process is exponentially positively correlated with bits. For example, if one unit of processing resources needs to be consumed to detect the error of 1 bit, four units of processing resources need to be consumed to detect the error of 2 bits, and nine units of processing resources need to be consumed to detect an error of 3 bits. In this embodiment of this application, the processor does not need to perform error detection. Therefore, compared with the conventional technology in which error detection needs to be performed, considerable processing resources can be saved. It can be learned that, in this embodiment of this application, it is important that the processor does not need to perform a process.

As described above, the processor may perform the subsequent processing on the medium particle in which the error occurs. For example, the processor may mark the medium particle in which the error occurs as an unavailable medium particle, and subsequently no longer use the medium particle in which the error occurs, to ensure data security. For another example, the processor may rewrite correct data into the medium particle in which the error occurs, to ensure that the medium particle in which the error occurs can continue to be normally used.

In an example embodiment, the plurality of medium particles may include service medium particles and ECC medium particles, and a quantity ratio of the service medium particles to the ECC medium particles may be 4:1, that is, four service medium particles correspond to one ECC medium particle. The quantity ratio is also referred to as a redundancy ratio. The redundancy ratio is not limited herein, and the redundancy ratio may be set based on an actual situation. Correspondingly, the processor may use different processing manners based on different medium particles. Refer to the following case F1 and case F2.

Case F1: The medium particle in which the error occurs is a service medium particle, and data read from the medium particle in which the error occurs is service data. In this case, the processor may correct the service data based on reference data, where the reference data is read from an ECC medium particle in which no error occurs.

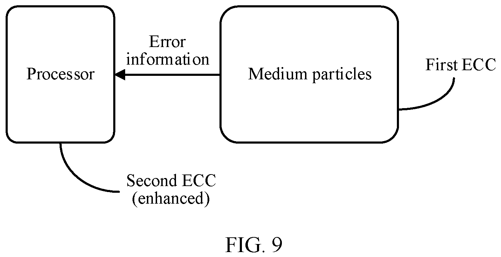

As shown in FIG. 9, the on-die ECC process described in the foregoing case E1 is first ECC, and the processor performs second ECC herein. For example, compared with the first ECC, the second ECC may be enhanced ECC with a stronger error correction capability. For example, in the first ECC, data of 8 bits is used to perform error correction on data of 128 bits. In the second ECC, a redundancy ratio of 4:1 is used as an example. If service data of 128 bits is separately read from four service medium particles, and service data of 128 bits is also read from one corresponding ECC medium particle, reference data of 32 bits may be allocated to every service data of 128 bits. Therefore, the processor may use the reference data of 32 bits to perform error correction on the service data of 128 bits, thereby improving an error correction capability. It should be understood that, if the redundancy ratio is increased to 3:1, 2: 1, or higher, the error correction capability of the second ECC may be further improved.

For example, regardless of reading the reference data or reading the service data, the processor may complete reading in a plurality of consecutive bursts. In an example in which the service data is read, the processor may continuously read the service data in 16 bursts, and read service data of 8 bits in each burst, to implementing reading of service data of 128 bits.

Case F2: The medium particle in which the error occurs is an ECC medium particle, and the data read from the medium particle in which the error occurs is reference data used to correct service data. In this case, the processor may delete the reference data.

Because the error occurs in the ECC medium particle, the reference data stored in the ECC medium particle is no longer applicable to correcting other service data. In this case, the reference data may be deleted.

In conclusion, in this embodiment of this application, the error information obtained by the processor indicates the medium particle in which the error occurs in the plurality of medium particles. Therefore, the processor may directly determine, based on the error information, the medium particle in which the error occurs, and determine, without a process such as calculation that consumes a processing resource, the medium particle in which the error occurs. Therefore, the processor may use more processing resources to process the medium particle in which the error occurs, thereby improving reliability and availability of the error determining system.

An embodiment of this application further provides a processor. The processor is configured to obtain error information, where the error information indicates a medium particle in which an error occurs in a plurality of medium particles. The processor is further configured to determine, based on the error information, the medium particle in which the error occurs.

For example, the processor is configured to receive, through a line, the error information sent by a control interface circuit.

In an example embodiment, the processor includes a host ECC element, the control interface circuit includes an RCD, and the line includes a signal line.

For example, the processor includes a processing core, the control interface circuit includes an RCD, and the line includes a first bus.

Optionally, the error information includes a plurality of bits, and the plurality of bits are in one-to-one correspondence with the plurality of medium particles.

For example, the error information includes an identifier of the medium particle in which the error occurs.

An embodiment of this application further provides a memory. The memory includes a plurality of medium particles, where the plurality of medium particles are configured to generate error information, and the error information indicates a medium particle in which an error occurs in the plurality of medium particles.

For example, the memory further includes a control interface circuit, where the control interface circuit is configured to send the error information to a processor through a line.

For example, the processor includes a host ECC element, the control interface circuit includes an RCD, and the line includes a signal line.

Optionally, the processor includes a processing core, the control interface circuit includes an RCD, and the line includes a first bus.

For example, the control interface circuit is separately connected to the plurality of medium particles; the plurality of medium particles are configured to send a plurality of pieces of sub-error information to the control interface circuit in parallel; for any medium particle in the plurality of medium particles, sub-error information sent by the any medium particle indicates an error status of the any medium particle; and the control interface circuit is further configured to process the plurality of pieces of sub-error information in a parallel-to-serial manner to obtain the error information.

For example, the error status of the any medium particle includes whether an error occurs in the any medium particle; or the error status of the any medium particle includes that no error occurs, a CE occurs, or a DUE occurs in the any medium particle.

For example, the any medium particle is configured to send the sub-error information when a DUE occurs in the any medium particle; or the any medium particle is configured to send the sub-error information when a CE or a DUE occurs in the any medium particle.

Optionally, the error information includes a plurality of bits, and the plurality of bits are in one-to-one correspondence with the plurality of medium particles.

For example, the error information includes an identifier of the medium particle in which the error occurs.

In some implementations, an embodiment of this application further provides an error determining system. The system includes a processor and a memory. The processor is any one of the foregoing example processors, and the memory is any one of the foregoing example memories.

In some other implementations, an embodiment of this application further provides an error determining system. The system includes a processor and a plurality of medium particles, where the plurality of medium particles are configured to generate error information, and the error information indicates a medium particle in which an error occurs in the plurality of medium particles; the processor is configured to obtain the error information; and the processor is further configured to determine, based on the error information, the medium particle in which the error occurs.

For example, the system further includes a control interface circuit, where the processor is connected to the control interface circuit through a line; the control interface circuit is configured to send the error information to the processor through the line; and the processor is configured to receive, through the line, the error information sent by the control interface circuit.

Optionally, the processor includes a processing core, the control interface circuit includes a CPLD, and the line includes a second bus.

For example, the control interface circuit is separately connected to the plurality of medium particles; the plurality of medium particles are configured to send a plurality of pieces of sub-error information to the control interface circuit in parallel; for any medium particle in the plurality of medium particles, sub-error information sent by the any medium particle indicates an error status of the any medium particle; and the control interface circuit is further configured to process the plurality of pieces of sub-error information in a parallel-to-serial manner to obtain the error information.

In an example embodiment, the error status of the any medium particle includes whether an error occurs in the any medium particle; or the error status of the any medium particle includes that no error occurs, a CE occurs, or a DUE occurs in the any medium particle.

For example, the any medium particle is configured to send the sub-error information when a DUE occurs in the any medium particle; or the any medium particle is configured to send the sub-error information when a CE or a DUE occurs in the any medium particle.

Optionally, the error information includes a plurality of bits, and the plurality of bits are in one-to-one correspondence with the plurality of medium particles.

For example, the error information includes an identifier of the medium particle in which the error occurs.

In this application, terms such as "first" and "second" are used to distinguish between same items or similar items that have basically same functions. It should be understood that "first", "second", and "n^{th}" do not have a logical or time sequential dependency relationship, and do not limit the quantity and execution sequence. It should further be understood that although the following description uses terms such as "first" and "second" to describe various elements, these elements should not be limited by the terms. These terms are simply used to distinguish one element from another element.

It should further be understood that, in embodiments of this application, sequence numbers of the processes do not mean execution sequences. The execution sequences of the processes should be determined based on functions and internal logic of the processes, and should not be construed as any limitation on implementation processes of embodiments of this application.

It should be understood that the terms used in the descriptions of the various examples in this specification are merely intended to describe specific examples and are not intended to impose a limitation. The terms "one" ("a" and "an") and "the" of singular forms used in the descriptions of the various examples and the appended claims are also intended to include plural forms, unless otherwise specified in the context clearly.

It should further be understood that the terms "if" and "on condition that" may be interpreted to mean "when" ("when" or "upon") or "in response to determining" or "in response to detecting". Similarly, based on the context, the phrase "if it is determined that" or "if (a stated condition or event) is detected" may be interpreted as a meaning of "when it is determined that" or "in response to determining" or "when (a stated condition or event) is detected" or "in response to detecting (a stated condition or event)".

The foregoing descriptions are merely embodiments of this application, but are not intended to limit this application. Any modification, equivalent replacement, improvement, or the like made without departing from the principle of this application should fall within the protection scope of this application.

## Claims

1. An error determining method, wherein the method is applied to a processor comprised in an error determining system, the error determining system further comprises a plurality of medium particles, and the method comprises:
obtaining, by the processor, error information, wherein the error information indicates a medium particle in which an error occurs in the plurality of medium particles; and
determining, by the processor based on the error information, the medium particle in which the error occurs.

2. The method according to claim 1, wherein the error determining system further comprises a control interface circuit, and the processor is connected to the control interface circuit through a line; and
the obtaining, by the processor, error information comprises:
receiving, by the processor through the line, the error information sent by the control interface circuit.

3. The method according to claim 2, wherein the processor comprises a host error correction code ECC element, the control interface circuit comprises a registering clock driver RCD, and the line comprises a signal line.

4. The method according to claim 2, wherein the processor comprises a processing core, the control interface circuit comprises a registering clock driver RCD, and the line comprises a first bus.

5. The method according to claim 2, wherein the processor comprises a processing core, the control interface circuit comprises a complex programmable logic device CPLD, and the line comprises a second bus.

6. The method according to any one of claims 2 to 5, wherein the control interface circuit is separately connected to the plurality of medium particles, the error information is obtained by the control interface circuit by processing a plurality of pieces of sub-error information in a parallel-to-serial manner, and the plurality of pieces of sub-error information are sent by the plurality of medium particles to the control interface circuit in parallel; and
for any medium particle in the plurality of medium particles, sub-error information sent by the any medium particle indicates an error status of the any medium particle.

7. The method according to claim 6, wherein the error status of the any medium particle comprises whether an error occurs in the any medium particle; or
the error status of the any medium particle comprises that no error occurs, a correctable error CE occurs, or a detectable uncorrectable error DUE occurs in the any medium particle.

8. The method according to claim 7, wherein the sub-error information is sent by the any medium particle when a DUE occurs in the any medium particle; or
the sub-error information is sent by the any medium particle when a CE or a DUE occurs in the any medium particle.

9. The method according to any one of claims 1 to 8, wherein the error information comprises a plurality of bits, and the plurality of bits are in one-to-one correspondence with the plurality of medium particles.

10. The method according to any one of claims 1 to 8, wherein the error information comprises an identifier of the medium particle in which the error occurs.

11. A processor, wherein the processor is configured to obtain error information, the error information indicates a medium particle in which an error occurs in a plurality of medium particles; and
the processor is further configured to determine, based on the error information, the medium particle in which the error occurs.

12. The processor according to claim 11, wherein the processor is configured to receive, through a line, the error information sent by a control interface circuit.

13. The processor according to claim 12, wherein the processor comprises a host error correction code ECC element, the control interface circuit comprises a registering clock driver RCD, and the line comprises a signal line.

14. The processor according to claim 12, wherein the processor comprises a processing core, the control interface circuit comprises a registering clock driver RCD, and the line comprises a first bus.

15. The processor according to any one of claims 11 to 14, wherein the error information comprises a plurality of bits, and the plurality of bits are in one-to-one correspondence with the plurality of medium particles.

16. The processor according to any one of claims 11 to 14, wherein the error information comprises an identifier of the medium particle in which the error occurs.

17. A memory, wherein the memory comprises a plurality of medium particles; and
the plurality of medium particles are configured to generate error information, and the error information indicates a medium particle in which an error occurs in the plurality of medium particles.

18. The memory according to claim 17, wherein the memory further comprises a control interface circuit; and
the control interface circuit is configured to send the error information to a processor through a line.

19. The memory according to claim 18, wherein the processor comprises a host error correction code ECC element, the control interface circuit comprises a registering clock driver RCD, and the line comprises a signal line.

20. The memory according to claim 18, wherein the processor comprises a processing core, the control interface circuit comprises a registering clock driver RCD, and the line comprises a first bus.

21. The memory according to any one of claims 18 to 20, wherein the control interface circuit is separately connected to the plurality of medium particles;
the plurality of medium particles are configured to send a plurality of pieces of sub-error information to the control interface circuit in parallel, and for any medium particle in the plurality of medium particles, sub-error information sent by the any medium particle indicates an error status of the any medium particle; and
the control interface circuit is further configured to process the plurality of pieces of sub-error information in a parallel-to-serial manner to obtain the error information.

22. The memory according to claim 21, wherein the error status of the any medium particle comprises whether an error occurs in the any medium particle; or
the error status of the any medium particle comprises that no error occurs, a correctable error CE occurs, or a detectable uncorrectable error DUE occurs in the any medium particle.

23. The memory according to claim 22, wherein the any medium particle is configured to send the sub-error information when a DUE occurs in the any medium particle; or
the any medium particle is configured to send the sub-error information when a CE or a DUE occurs in the any medium particle.

24. The memory according to any one of claims 17 to 23, wherein the error information comprises a plurality of bits, and the plurality of bits are in one-to-one correspondence with the plurality of medium particles.

25. The memory according to any one of claims 17 to 23, wherein the error information comprises an identifier of the medium particle in which the error occurs.

26. An error determining system, wherein the system comprises a processor and a memory, the processor is the processor according to any one of claims 11 to 16, and the memory is the memory according to any one of claims 17 to 25.

27. An error determining system, wherein the system comprises a processor and a plurality of medium particles;
the plurality of medium particles are configured to generate error information, and the error information indicates a medium particle in which an error occurs in the plurality of medium particles;
the processor is configured to obtain the error information; and
the processor is further configured to determine, based on the error information, the medium particle in which the error occurs.

28. The system according to claim 27, wherein the system further comprises a control interface circuit, and the processor is connected to the control interface circuit through a line;
the control interface circuit is configured to send the error information to the processor through the line; and
the processor is configured to receive, through the line, the error information sent by the control interface circuit.

29. The system according to claim 28, wherein the processor comprises a processing core, the control interface circuit comprises a complex programmable logic device CPLD, and the line comprises a second bus.

30. The system according to claim 28 or 29, wherein the control interface circuit is separately connected to the plurality of medium particles;
the plurality of medium particles are configured to send a plurality of pieces of sub-error information to the control interface circuit in parallel, and for any medium particle in the plurality of medium particles, sub-error information sent by the any medium particle indicates an error status of the any medium particle; and
the control interface circuit is further configured to process the plurality of pieces of sub-error information in a parallel-to-serial manner to obtain the error information.

31. The system according to claim 30, wherein the error status of the any medium particle comprises whether an error occurs in the any medium particle; or
the error status of the any medium particle comprises that no error occurs, a correctable error CE occurs, or a detectable uncorrectable error DUE occurs in the any medium particle.

32. The system according to claim 31, wherein the any medium particle is configured to send the sub-error information when a DUE occurs in the any medium particle; or
the any medium particle is configured to send the sub-error information when a CE or a DUE occurs in the any medium particle.

33. The system according to any one of claims 27 to 32, wherein the error information comprises a plurality of bits, and the plurality of bits are in one-to-one correspondence with the plurality of medium particles.

34. The system according to any one of claims 27 to 32, wherein the error information comprises an identifier of the medium particle in which the error occurs.
